# EUROPEAN PATENT APPLICATION

(11) **EP 3 351 996 A1**
(43) Date of publication of application: **25.07.2018**
(21) Application number: 16846399.0
(22) Date of filing: 09.09.2016
(51) Int. Cl.: G02B 27/02, G02B 5/32

(54) **IMAGE DISPLAY DEVICE AND HEAD MOUNTED DISPLAY**

(30) Priority: 16.09.2015 JP 2015182990
(71) Applicant: Konica Minolta, Inc., Tokyo 100-7015 (JP)
(72) Inventor: OKANO Takayuki, Chiyoda-Ku Tokyo 100-7015 (JP)
(74) Representative: Gille Hrabal
(86) International application number: PCT/JP2016/076690
(87) International publication number: WO 2017/047528

(57) **Abstract**

An image display device is provided with a display element (6), a light guide element (for example, an eyepiece prism (11)), and a diffractive optical element (for example, a hologram (13)). The light guide element has birefringence properties which impart birefringence for at least part of the image light from the display element (6) incident to the diffractive optical element. The image light is incident to the light guide element at a polarized orientation forming a P polarization with respect to the diffractive optical element when birefringence is not applied to the light guide element. The diffractive optical element has diffractive properties wherein the peak of diffraction efficiency changes according to position within the element surface when diffraction efficiency is measured for the same polarized light at different positions within the element surface. In the diffractive optical element, the peak of diffraction efficiency becomes lower moving away within the element surface from a position (Bc) on a light path for the image light in which the amount of birefringence in the light guide element is the smallest.

## Description

### Technical Field

The present invention relates to an image display device, and to a head-mounted display (hereinafter also referred to as HMD) incorporating an image display device.

### Background Art

There are conventionally proposed image display devices that permit an observer to observe an image (virtual image) by guiding image light from a display element inside a light guide prism and then directing it through a diffractive optical element to an observation pupil (see, e.g., Patent Document 1). In such image display devices, if brightness unevenness (brightness difference) is present on the plane of the image, it degrades the quality of the image viewed by the observer.

To cope with that, for example, according to Patent Document 2, a hologram having interference fringes with varying slant angles (inclination angles) is used as a diffractive optical element to reduce brightness unevenness that depends on the angle of incidence of incident parallel light. For another example, according to Patent Document 3, a diffractive optical element is given a higher diffraction efficiency on the side closer to a light source and a lower diffraction efficiency on the side farther from the light source, and the light from the light source is diffraction-reflected on the diffractive optical element a plurality of times and is then directed to an observation pupil. Thus, while the amount of light emanating from the diffractive optical element is kept in a good balance, even brightness is obtained. For yet another example, according to Patent Document 4, an observer with an interpupillary distance different from a design interpupillary distance is presented with left and right images of different colors which the observer views with both eyes respectively, and the left and right images are added up so that the observer can observe an image with less color unevenness. Color unevenness results from the light reaching an observation pupil having different intensities at different wavelengths, and thus improving color unevenness is considered to lead to improving brightness unevenness. However, Patent Document 4 suffers from the restriction: the image has to be observed with both eyes to obtain improved color and brightness unevenness.

### List of Citations

### Patent Literature

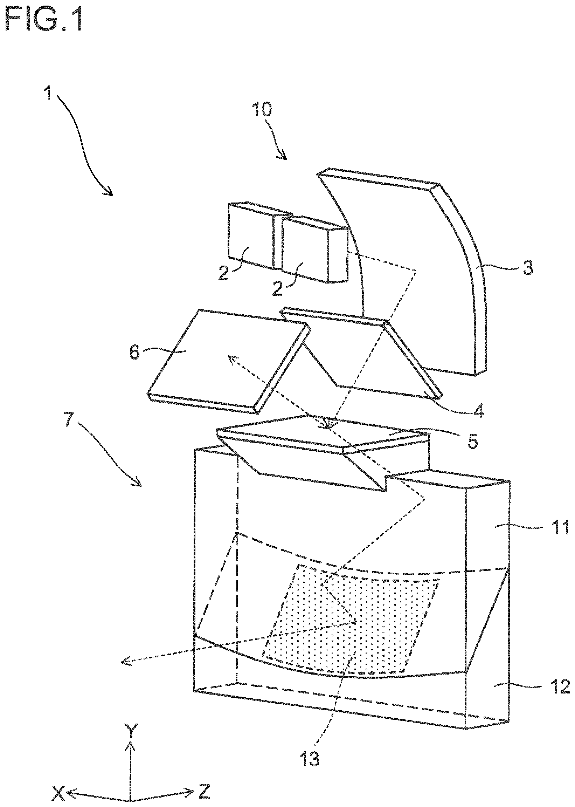

Patent Document 1: Japanese Patent Application published as No. 2015-105990 (see claim 1, Fig. 2A, etc.)
Patent Document 2: Japanese Patent Application published as No. 2013-117743 (see claim 1, paragraph [0014], etc.)
Patent Document 3: Japanese Patent Application published as No. 2014-63173 (see paragraphs [0130] and [0137], Fig. 2I, etc.)
Patent Document 4: Japanese Patent Application published as No. 2008-287049 (see claim 1, paragraphs [0012], [0013], and [0037], Fig. 1, etc.)

### Summary of the Invention

### Technical Problem

Materials for light guide elements include those which do not cause birefringence, such as glass materials, and those which cause birefringence (birefringent materials), such as acrylic resin. With a light guide element formed of a birefringent material, when light enters it, birefringence produces a change in the polarization state of the light guided inside the light guide element. Moreover, the degree of birefringence varies with the place in the light guide element (the optical path of the guided light). Thus, light in different polarization states are incident at different positions on a diffractive optical element. A diffractive optical element has polarization dependence whereby its diffraction efficiency varies with the polarization state of the incident light; thus, when light in different polarization states are incident at different positions on an diffractive optical element, it exhibits varying diffraction efficiencies at the different positions. Accordingly, when light diffracted with diffraction efficiencies varying with the position on the diffractive optical element are directed to an observation pupil, the image observed by an observer has brightness unevenness resulting from varying diffraction efficiencies.

In this regard, none of Patent Documents 2 to 4 mentioned above give any consideration to the polarization dependence of the diffraction efficiency of diffractive optical elements; thus, in cases where birefringence occurs in a light guide element, it is not possible to reduce brightness unevenness due to varying polarization states resulting from birefringence.

Devised to solve the problems discussed above, the present invention aims to provide an image display device that provides improved image quality, even in a case where a light guide element produces birefringence, by reducing brightness unevenness due to varying polarization states resulting from birefringence, and to provide an HMD incorporating such an image display device.

### Means for Solving the Problem

According to one aspect of the present invention, an image display device includes: a display element which displays an image; a light guide element which guides, inside it, the image light from the display element; and a diffractive optical element which diffracts the image light guided by the light guide element to direct it to an observation pupil. The light guide element has birefringence whereby at least part of the image light incident on the diffractive optical element is doubly refracted. The image light enters the light guide element with such a polarization direction that, if the light guide element has no birefringence, the image light is P-polarized light with respect to the diffractive optical element. The diffractive optical element has such diffraction characteristics that, when diffraction efficiencies for light of the same polarization type are measured at different positions across the element surface of the diffractive optical element, diffraction efficiency peaks vary from place to place across the element surface. The diffraction efficiency peaks are increasingly low the farther away across the element surface from the position on the optical path of the image light at which the light guide element exhibits the smallest amount of birefringence.

According to another aspect of the present invention, an image display device includes: a display element which displays an image; a light guide element which guides, inside it, the image light from the display element; and a diffractive optical element which diffracts the image light guided by the light guide element to direct it to an observation pupil. The light guide element has birefringence whereby at least part of the image light incident on the diffractive optical element is doubly refracted. The image light enters the light guide element with such a polarization direction that, if the light guide element has no birefringence, the image light is S-polarized light with respect to the diffractive optical element. The diffractive optical element has such diffraction characteristics that, when diffraction efficiencies for light of the same polarization type are measured at different positions across the element surface of the diffractive optical element, the diffraction efficiency peaks vary from place to place across the element surface. The diffraction efficiency peaks are increasingly high the farther away across the element surface from the position on the optical path of the image light at which the light guide element exhibits a smallest amount of birefringence.

According to yet another aspect of the present invention, a head-mounted display includes: an image display device as described above; and a support member which supports the image display device in front of an observer's eye.

### Advantageous Effects of the Invention

According to the present invention, even in a case where a light guide element produces birefringence, it is possible, through the setting of diffraction characteristics in a diffractive optical element as described above, to reduce brightness unevenness due to varying polarization states resulting from birefringence, and thereby to obtain improved image quality.

### Brief Description of Drawings

Fig. 1 is a perspective view showing in outline the construction of an image display device according to Embodiment 1 of the present invention;
Fig. 2 is a sectional view of the image display device;
Fig. 3 is a front view of the image display device as seen from the observer's side:
Fig. 4 is a front view of an eyepiece optical system in the image display device as seen from the observer's side
Fig. 5 shows, for image light emanating from different positions on the display surface of a display element in the image display device, an example of the light's polarization states when incident on an eyepiece prism and when incident on a hologram;
Fig. 6 is a diagram illustrating the diffraction characteristics of the hologram at different positions across its element surface;
Fig. 7 is a graph showing the intensity distribution of a laser beam used in the fabrication of the hologram;
Fig. 8 is a diagram illustrating an example of the method for exposure, using the laser beam, of a hologram photosensitive material;
Fig. 9 is a diagram illustrating the actual diffraction efficiencies when image light is diffracted at different positions across the element surface;
Fig. 10 shows, for image light emanating from different positions on the display surface of a display element in an image display device according to Embodiment 2 of the present invention, an example of the light's polarization states when incident on an eyepiece prism and when incident on a hologram;
Fig. 11 is a diagram illustrating the diffraction characteristics at different positions across the element surface of the hologram along with the actual diffraction efficiencies when image light is diffracted at the different positions across the element surface;
Fig. 12 is a diagram illustrating different regions on the display surface of the display element;
Fig. 13 shows, for image light emanating from different positions on the display surface of the display element in the image display device according to Embodiment 1, another example of the light's polarization states when incident on the eyepiece prism and when incident on the hologram;
Fig. 14 is a diagram illustrating the diffraction characteristics at different positions across the element surface of the hologram along with the actual diffraction efficiencies when image light is diffracted at the different positions across the element surface;
Fig. 15A is a top view of a head-mounted display to which the image display device is applied;
Fig. 15B is a front view of the head-mounted display;
Fig. 15C is a bottom view of the head-mounted display; and
Fig. 16 is a perspective view of the head-mounted display as seen from the front side.

### Description of Embodiments

### [Embodiment 1]

One embodiment of the present invention will be described below with reference to the accompanying drawings. In the present description, any numerical range given as "a to b" is assumed to include both the lower and upper limit values "a" and "b". The present invention is not limited in any way by what is disclosed herein.

In the following description, the left-right, front-rear, and up-down directions denote the respective directions as seen from the position (the direction of the line of sight) of an observer observing an image. The interpupillary distance direction (left-right direction), the front-rear direction, and the up-down direction during image observation are referred to respectively as the X, Y, and Z directions (with no regard to whether forward or reversely in each direction). In the diagrams, to avoid complication, only representative optical paths are indicated by broken lines.

### (Image Display Device)

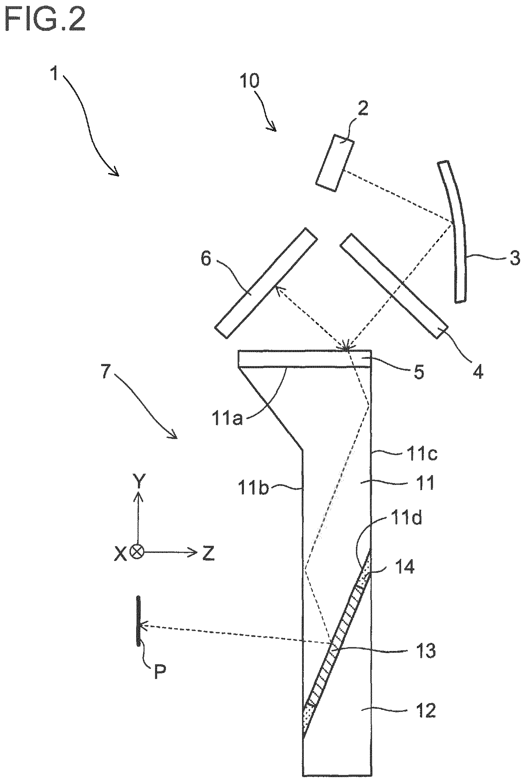

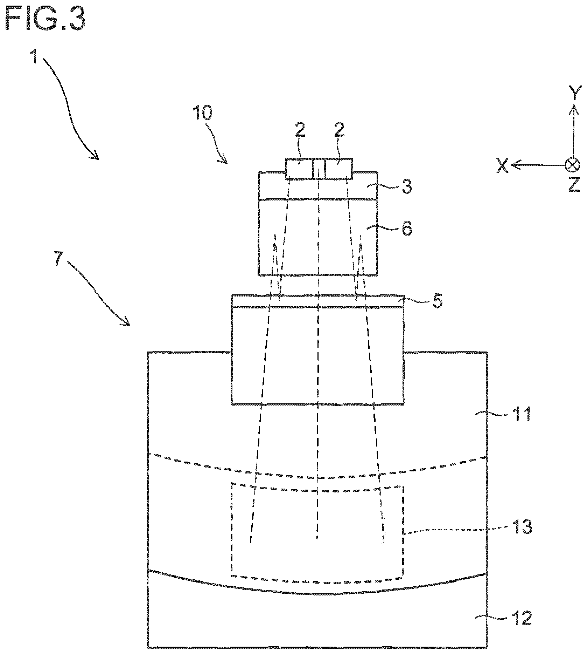

Figs. 1 and 2 are a perspective view and a sectional view, respectively, showing in outline the construction of an image display device 1 according to this embodiment. Fig. 3 is a front view of the image display device 1 as seen from the observer's side. The image display device 1 includes a light source 2, an illumination mirror 3, a diffuser plate 4, a polarizing beam splitter (PBS) 5, a display element 6, and an eyepiece optical system 7. The light source 2 and the illumination mirror 3 together constitute an illumination optical system 10 for illuminating the display element 6.

The light source 2 comprises an RGB-integrated LED that emits light corresponding to the colors of R (red), G (green), and B (blue). A plurality of luminous spots (R, G, and B luminous spots) are arrayed substantially along a straight line. The wavelengths of the light emitted from light source 2 are, for example, 462±12 nm (B light), 525±17 nm (G light), and 635±11 nm (R light) in terms of light intensity peak wavelength combined with full wavelength width at half maximum intensity. The light source 2 can be a laser light source.

In this embodiment, the light source 2 includes a pair of RGB-integrated LEDs. Their luminous spots are arrayed substantially along a straight line such that, for each of R, B, and G, the luminous spots are located symmetrically with respect to the optical axis incidence plane of a hologram 13, which will be described later (e.g., the luminous spots are arrayed in the order BGRRGB in the X direction). In this way, it is possible to obtain an RGB light intensity distribution that is symmetric in the X direction.

The illumination mirror 3 is an optical element which, on one hand, reflects the light (illumination light) emitted from the light source 2 toward the diffuser plate 4 and which, on the other hand, deflects the illumination light such that an observation pupil P, which is an optical pupil (exit pupil), is substantially conjugate with the light source 2 in the YZ plane.

The diffuser plate 4 is a diffuser plate which diffuses incident light in all directions. The diffuser plate 4 may be omitted; however, from the viewpoint of widening the orientation angle of incident light and thereby making the light intensity of the light source 2 more even, it is preferable that the diffuser plate 4 be arranged. The diffuser plate 4 can be a diffuser plate that diffuses incident light only in one direction (e.g., the X direction) (i.e., a unidirectional diffuser plate).

The PBS 5 is a flat plate-shaped polarizing beam splitting element which, on one hand, reflects only S-polarized light (S light) in incident light toward the display element 6 and which, on the other hand, transmits only that part of the light reflected from the display element 6 which corresponds to ON parts of a image signal, that is, P-polarized light (P light). The PBS 5 is bonded to a light entrance face (face 11a) of an eyepiece prism 11, which will be described later, in the eyepiece optical system 7.

The display element 6 is a display element which displays an image by modulating the light from the light source 2. In this embodiment, the display element 6 comprises a reflective liquid crystal display element. The display element 6 can be configured to include color filters, or can be configured to be driven on a time-division basis such that, in synchronism with time-division light emission of R, G, and B, one at the time, by the light source 2, it displays R, G, and B images corresponding to the color of the light being emitted.

The display element 6 is arranged such that light incident substantially perpendicularly from the PBS 5 is reflected substantially perpendicularly toward the PBS 5. This makes easier such optical designs as offer higher resolutions compared with a construction where light is shone on a reflective display element at a large angle of incidence. The display element 6 has a rectangular display surface, and is arranged with, of the display surface, the longer sides aligned with the X direction and the shorter sides perpendicular to the X direction.

The eyepiece optical system 7 is an optical system for directing the image light from the display element 6 to the observation pupil P, and has a non-axisymmetric (non-rotation-symmetric) positive optical power. The eyepiece optical system 7 includes an eyepiece prism 11, a deflecting prism 12, and a hologram 13.

The eyepiece prism 11 is a light guide element which, on one hand, guides inside it the image light indecent from the display element 6 through the PBS 5 and which, on the other hand, transmits light of an outside world image (i.e., external light). The eyepiece prism 11 is configured in the shape of a plane-parallel plate of which an upper end part is made increasingly thick toward the upper end and of which a lower end part is made increasingly thin toward the lower end.

The eyepiece prism 11 has faces 11a to 11d. The face 11a is a light entrance face through which the image light travels in from the display element 6 through the PBS 5. The faces 11b and 11c are two mutually parallel flat faces that are located substantially parallel to the observation pupil P and that are located opposite each other, and are both total-reflection surfaces that guide the image light by totally reflecting it. Of these two faces, the one 11b on the observation pupil P side serves also as an exit face of the image light diffraction-reflected by the hologram 13. The face lid connects the faces 11b and 11c together; it is a bonding face to which the hologram 13 is bonded, and is inclined relative to the faces 11b and 11c. The face 11d is a curved (cylindrical) face that has a curvature only in one direction (X direction), but may instead be a flat face.

The eyepiece prism 11 is joined, with adhesive 14, to the deflecting prism 12 such that the hologram 13 is held between the eyepiece prism 11 and the deflecting prism 12. The deflecting prism 12, joined to the eyepiece prism 11 with the hologram 13 in between, forms substantially a plane-parallel plate. Bonding the deflecting prism 12 and the eyepiece prism 11 together makes it possible to cancel the refraction that occurs when external light passes through the wedge-form lower end part of the eyepiece prism 11; this helps prevent distortion in the outside world image observed.

The hologram 13 is a diffractive optical element which is disposed in contact with the eyepiece prism 11 and which diffracts the image light guided inside the eyepiece prism 11 to direct it to the observation pupil P. In this embodiment, the hologram 13 comprises a volume-phase reflective hologram optical element. A volume-phase hologram optical element is produced by irradiating a hologram photosensitive material with two beams of laser light so as to form fringes (interference fringes) resulting from the two beams interfering with each other. By use of, as the hologram photosensitive material, a photopolymer, for instance, the interference fringes can be formed easily through photopolymerization of the photopolymer. The interference fringes comprise a plurality of resin layers with different refractive indices stacked alternately; thus, the volume-phase hologram 13 can be said to be configured to include a plurality of resin layers that have different refractive indices and that are located alternately side by side.

The hologram 13 diffracts (reflects) light in three wavelength ranges of, for example, 465±5 nm (B light), 521±5 nm (G light), and 634±5 nm (R light) in terms of diffraction efficiency peak wavelength combined with full wavelength width at half maximum diffraction efficiency. That is, the RGB diffraction wavelengths of the hologram 13 are approximately equal to the wavelengths of the RGB image light (the light emission wavelengths of the light source 2).

In the construction described above, the light emitted from the light source 2 is reflected on the illumination mirror 3, is diffused by the diffuser plate 4, and is incident on the PBS 5, where only S-polarized light is reflected toward the display element 6. In the display element 6, the incident light is modulated according to an image signal. Here, the part of the image light corresponding to ON parts of the image signal is converted by the display element 6 to emerge as light (P-polarized light) whose polarization direction is perpendicular to that of the incident light; this part of the image light is thus transmitted through the PBS 5 to enter the eyepiece prism 11 through the face 11a. On the other hand, the part of the image light corresponding to OFF parts of the image signal does not have its polarization direction converted by the display element 6 and emerges as it is, that is, as S-polarized light; this part of the image light is thus intercepted by the PBS 5, and does not enter the eyepiece prism 11.

In the eyepiece prism 11, the image light that has entered it is totally reflected at least once on each of the two opposite faces 11c and 11b of the eyepiece prism 11, and is then incident on the hologram 13, where it is diffraction-reflected selectively for the R, G, and B colors respectively. The image light then travels out through the face 11b, and reaches the observation pupil P. Thus, at the position of the observation pupil P, an observer can observe, as a virtual image, the image displayed on the display element 6.

On the other hand, the eyepiece prism 11, the deflecting prism 12, and the hologram 13 transmit almost all external light, and thus the observer can observe an outside world image (scene outside) on a see-through basis. Thus, the virtual image of the image displayed on the display element 6 is observed in a form overlapping with part of the outside world image.

As described above, of the illumination light from the illumination optical system 10 (the light source 2 and the illumination mirror 3), light of a predetermined polarization direction (e.g., S-polarized light) is reflected by the PBS 5 to be directed to the display element 6. On the other hand, the light (for example, P-polarized light) that is reflected from the display element 6 and that has a polarization direction perpendicular to that of the light incident on the display element 6 is transmitted through the PBS 5 to be directed to the eyepiece prism 11. With this construction, where the optical path on the light entrance side with respect to the eyepiece prism 11 is deflected, it is possible, while securing the desired optical length from the light source 2 to the eyepiece prism 11, to arrange compactly the optical components disposed on the light entrance side with respect to the eyepiece prism 11. This makes it easy to miniaturize the image display device 1.

Moreover, as a diffractive optical element, a volume-phase hologram 13 including a plurality of resin layers that have different refractive indices and that are located alternately side by side is used. Thus, it is possible, by interference between two beams of laser light, to easily produce an optical element with the desired diffraction characteristics. The diffractive optical element is not limited to a volume-phase hologram 13; it may instead be, for example, a blazed optical element (with a sawtooth-form cross-sectional shape).

In this embodiment, the deflecting prism 12 is arranged to achieve satisfactory see-through observation of the outside world image with no distortion. In a case where satisfactory see-through observation is not sought, the deflecting prism 12 may be omitted.

In this embodiment, as the display element 6, a reflective liquid crystal display element is used; however, a transmissive liquid crystal display element may instead be used. In that case, by arranging the liquid crystal display element (i.e., setting the direction of the transmission axis of the light exit side polarizer plate (polarizer) relative to the liquid crystal cell) such that light of the desired polarization direction (e.g., light whose polarization direction is parallel to the optical axis incidence plane of the hologram 13) emerges from the transmissive liquid crystal display element, it is possible to eliminate the need for the PBS 5.

### (Birefringence to Image Light in the Eyepiece Prism)

The eyepiece prism 11 mentioned above is a resin prism formed of a resin material that causes birefringence, such as acrylic resin, and thus produces birefringence in at least part of the image light incident on the hologram 13 from the display element 6. That is, the eyepiece prism 11 has birefringence whereby at least part of the image light that has entered it is split into two types of linearly polarized light whose polarization directions (polarization planes) are perpendicular to each other. The degree of birefringence in the eyepiece prism 11 varies from place to place. Thus, the image light is incident on the hologram 13 in different polarization states depending on the position of incidence across the element surface. This will now be elaborated.

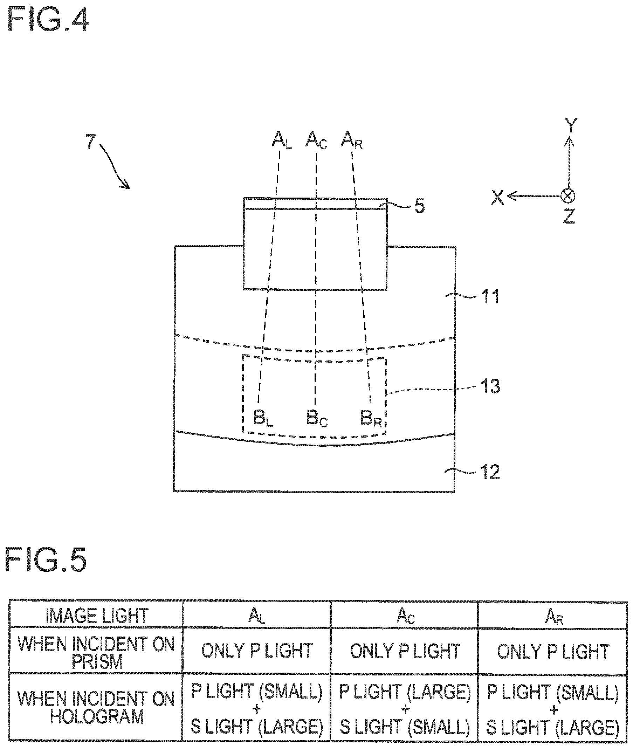

Fig. 4 is a front view of the eyepiece optical system 7 as seen from the observer's side (observation pupil P side). In Fig. 4, the optical paths of image light A_{C}, A_{L}, and A_{R} are indicated by broken lines respectively. Here, the image light A_{C} is the part of the image light that emanates from the center of the display surface of the display element 6 (see Fig. 3), is diffraction-reflected at the center of the element surface of the hologram 13, and is directed to the center of the observation pupil P. The image light A_{L} is the part of the image light that emanates from a position to the left of the center (e.g., at the left end) of the display surface of the display element 6, is diffraction-reflected at a position to the left of the center of the element surface of the hologram 13, and is directed to a position to the left of the center of the observation pupil P. The image light A_{R} is the part of the image light that emanates from a position to the right of the center (e.g., at the right end) of the display surface of the display element 6, is diffraction-reflected at a position to the right of the center of the element surface of the hologram 13, and is directed to a position to the right of the center of the observation pupil P.

For convenience' sake, in the following description, it is assumed that the line that optically connects the center of the display surface of the display element 6 to the center of the observation pupil P is the optical axis, and that the plane that includes the optical axis of the light incident on the hologram 13 and the optical axis of the light emergent from it is the optical axis incidence plane. The optical axis incidence plane is parallel to the YZ plane.

In the eyepiece prism 11 formed of a birefringent material, the degree of birefringence varies in the left-right direction (X direction), and the amount of birefringence exhibits a distribution in that direction. More specifically, the amount of birefringence is smallest at the center of the eyepiece prism 11 in the left-right direction (a position on the optical axis incidence plane), and is increasingly high the farther away leftward or rightward from the position on the optical axis incidence plane. Accordingly, the amount of birefringence in the eyepiece prism 11 exhibits a distribution that is symmetric in the left-right direction with respect to the optical axis incidence plane.

Configured as described above, the eyepiece prism 11 can be fabricated, for example, by resin molding in the following manner: two molds in substantially symmetric shapes in the left-right direction are prepared; a resin injection port (gate) is provided at the junction of the two molds; through the gate, resin (e.g., acrylic resin) is injected into the molds; the resin is then cooled and released from the molds. That is, by molding the eyepiece prism 11 by injecting resin into molds such that, inside the molds, the resin flow symmetrically in the left-right direction, it is possible to obtain an eyepiece prism 11 in which the amount of birefringence exhibits a distribution symmetric in the left-right direction.

The image light emanating from the display element 6 is, as P-polarized light, incident on the PBS 5, and is transmitted through it; thus, if the eyepiece prism 11 is not birefringent, the image light that has entered the eyepiece prism 11 is, as it is, that is, as P-polarized light, incident on the hologram 13. Actually, however, since the eyepiece prism 11 is birefringent as mentioned above, the image light is, in varying polarization states due to birefringence, incident on the hologram 13.

Fig. 5 shows, respectively for the image light A_{C}, A_{L}, and A_{R}, an example of their polarization states when incident on the eyepiece prism 11 and when incident on the hologram 13. Since the amount of birefringence is small at about the center of the eyepiece prism 11 in the left-right direction, the image light A_{C}, which is guided inside the eyepiece prism 11 by being totally reflected in the front-rear direction along about the center in the left-right direction, is, with its P-polarized state almost wholly retained, incident on the hologram 13. Here, a condition where "the amount of birefringence is small" is assumed to include one where the amount of birefringence equals zero or substantially zero. Thus, when the amount of birefringence equals zero, the image light A_{C} is, wholly as P-polarized light, incident on the hologram 13; when birefringence is present, part of P-polarized light is converted into S-polarized light, and thus the image light A_{C} is, in a state containing both P- and S-polarized light, incident on the hologram 13.

On the other hand, the amount of birefringence is increasingly high the farther away from the center of the eyepiece prism 11 in the left-right direction. Thus, for the image light A_{L} and A_{R}, which are guided inside the eyepiece prism 11 by being totally reflected in the front-rear direction at positions away from the center in the left-right direction, a larger proportion of P-polarized light is converted into S-polarized light; thus, the image light A_{L} and A_{R} are, in a state containing more S-polarized light than the image light A_{C}, incident on the hologram 13.

As shown in Fig. 4, let B_{C} represent the position on the hologram 13 at which the image light A_{C} is incident, and let B_{L} and B_{R} represent respectively the positions at which the image light A_{L} and A_{R} are incident. The hologram 13 has polarization dependence whereby its diffraction efficiency varies with the polarization state of the incident light; thus, when light in different polarization states are incident at different positions B_{C}, B_{L}, and B_{R} on the hologram 13, they exhibit varying diffraction efficiencies at the positions B_{C}, B_{L}, and B_{R}, resulting in brightness unevenness. To address the problem, in this embodiment, the hologram 13 is given diffraction characteristics as described below.

### (Diffraction Characteristics of the Hologram)

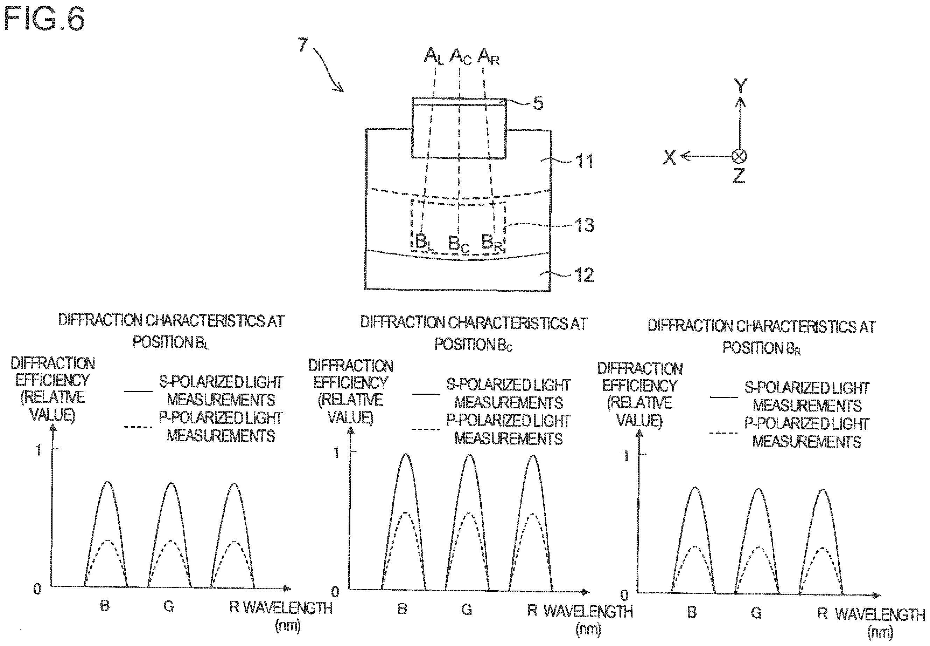

Fig. 6 shows the diffraction characteristics of the hologram 13 at different positions B_{C}, B_{L}, and B_{R} across its element surface. As shown there, the hologram 13 has such diffraction characteristics that, in all of the three wavelength ranges of R, G, and B, the diffraction efficiency peak varies with the position across the element surface (the position of incidence of the image light). In the hologram 13, in all of the wavelength ranges of R, G, and B, the diffraction efficiency peak is increasingly low the farther away in the left-right direction across the element surface from the position B_{C} on the optical path of the image light (the optical path of the image light A_{C}) at which the eyepiece prism 11 exhibits the smallest amount of birefringence.

That is, when diffraction efficiency for S-polarized light, for instance, is measured at different positions B_{C}, B_{L}, and B_{R} across the element surface of the hologram 13, the diffraction efficiency peak for S-polarized light at the position B_{C} is higher than the diffraction efficiency peaks for S-polarized light at the other positions B_{L} and B_{R}, and the diffraction efficiency peak for S-polarized light is increasingly low the farther away from the position B_{C} (the closer to the positions B_{L} and B_{R}) in the left-right direction. Likewise, when diffraction efficiency for P-polarized light, for instance, is measured at different positions B_{C}, B_{L}, and B_{R} across the element surface of the hologram 13, the diffraction efficiency peak for P-polarized light at the position B_{C} is higher than the diffraction efficiency peaks for P-polarized light at the other positions B_{L} and B_{R}, and the diffraction efficiency peak for P-polarized light is increasingly low the farther away from the position B_{C} (the closer to the positions B_{L} and B_{R}) in the left-right direction. Incidentally, as shown in Fig. 6, in the hologram 13, in general, the diffraction efficiency peak for S-polarized light is higher than that for P-polarized light.

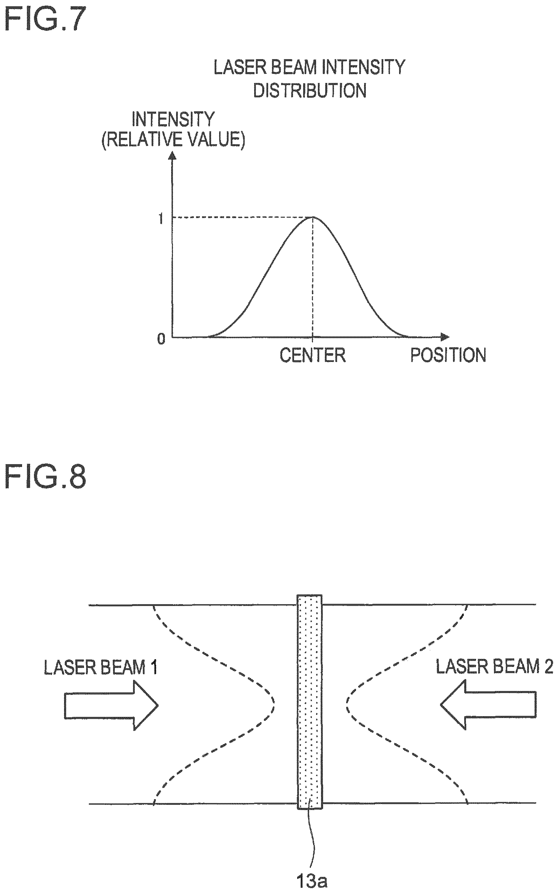

The hologram 13 with diffraction characteristics as described above can be fabricated in the following manner. For example, in a case where a photopolymer is used as the hologram photosensitive material, resin layers with different refractive indices are formed periodically through photopolymerization of the photopolymer. Specifically, the hologram photosensitive material is irradiated with at least two beams of coherent light, such as laser beams, that interfere with each other, so that interference fringes are formed in the hologram photosensitive material. Here, laser beams with a unimodal intensity distribution as shown in Fig. 7 (Gaussian beams) are used. Then, as shown in Fig. 8, the hologram photosensitive material 13a is irradiated with the Gaussian beams (laser beams 1 and 2) with the center of the Gaussian beams located at where a high diffraction efficiency is desired. In Fig. 8, the intensity distributions of the laser beams are indicated by broken lines.

Through exposure of the hologram photosensitive material 13a as described above, high exposure intensity is obtained at where a high diffraction efficiency is desired; this promotes the photopolymerization of the photopolymer, and produces a larger refractive index difference between resin layers. Thus, the fabricated hologram 13 has a higher diffraction efficiency in a predetermined part. Moreover, the intensity of the Gaussian beams during exposure is increasingly low from where a high diffraction efficiency is desired toward the edge; thus, the fabricated hologram 13 exhibits an increasingly low diffraction efficiency the farther away from the above-mentioned predetermined part. That is, a "high diffraction efficiency" indicates a condition where there is a large refractive index difference between neighboring resin layers when resin layers with different refractive indices are formed periodically; by contrast, a "low diffraction efficiency" indicates a state where there is a small refractive index difference between neighboring resin layers.

In Fig. 8, for simplicity's sake, two beams (laser beams) are used for exposure, and the two beams are shone on the hologram photosensitive material 13a from opposite directions so as to interfere with each other. Instead, so long as the above-described relationship between the variation of diffraction efficiency and the intensity distribution of laser beams is satisfied, the number of beams used for exposure, the directions (angles of incidence) of the light beams relative to the hologram photosensitive material 13a, and the like may be modified to suit the given conditions, such as according to a specific optical design.

In the example described above, Gaussian beams are used, and their intensity distribution is utilized to expose the hologram photosensitive material 13a. Instead, beams with any other intensity distribution may be used for exposure. Specifically, such other beams may be reshaped into beams with desired intensity distributions by use of an optical element such as a mirror, a lens, or an aperture stop, and the hologram photosensitive material 13a may be exposed such that a part of it where a high diffraction efficiency is desired is irradiated with high-intensity parts of the reshaped beams.

Exposure may instead be performed by first forming a photopolymer layer on a resin prism (eyepiece prism 11) and then irradiating it with a laser beam with such an intensity distribution as to give a high diffraction efficiency at where it is desired. Instead, a photopolymer layer may be formed on a substrate or a film beforehand, and it may then be exposed by being irradiated with a laser beam with an intensity distribution; the fabricated hologram can then be cut out into such a shape as to give a desired distribution of diffraction efficiency across the surface, and the hologram so cut out can be bonded to a resin prism with adhesive or the like.

### (Benefits)

By giving the hologram 13 diffraction characteristics (a distribution of diffraction efficiency) as shown in Fig. 6, even when the eyepiece prism 11 is birefringent, it is possible to suppress brightness unevenness due to varying polarization states resulting from birefringence, and thereby to improve image quality. This can be elaborated as follows.

As described above, the image light A_{C} travels, as P-polarized light, into the eyepiece prism 11, and is guided, substantially as it is, that is, as P-polarized light, inside the eyepiece prism 11 to be incident on the hologram 13 at the position B_{C}. In the hologram 13, in general, the diffraction efficiency for S-polarized light is higher than that for P-polarized light; thus, for the image light A_{C}, which contains a large P-polarized light component and a small S-polarized light component, the diffraction efficiency on the hologram 13 is, with consideration given to polarization (when the diffraction efficiencies for S- and P-polarized light are added up), low. However, with attention paid to the distribution of diffraction efficiency across the element surface as shown in Fig. 6, the diffraction efficiency at the position B_{C} is higher than those at the other positions B_{L} and B_{R}.

On the other hand, the image light A_{L} and A_{R} travel, as P-polarized light, into the eyepiece prism 11, but are incident, as light containing a larger S-polarized light component than the image light A_{C} due to varying polarization states resulting from birefringence, on the hologram 13 at the positions B_{L} and B_{R} respectively. Thus, for the image light A_{L} and A_{R}, the diffraction efficiencies on the hologram 13 are, with consideration given to polarization, high (because of the large S-polarized light component). However, with attention paid to the distribution of diffraction efficiency across the element surface as shown in Fig. 6, the diffraction efficiencies at the positions B_{L} and B_{R} are lower than that at the other position B_{C}.

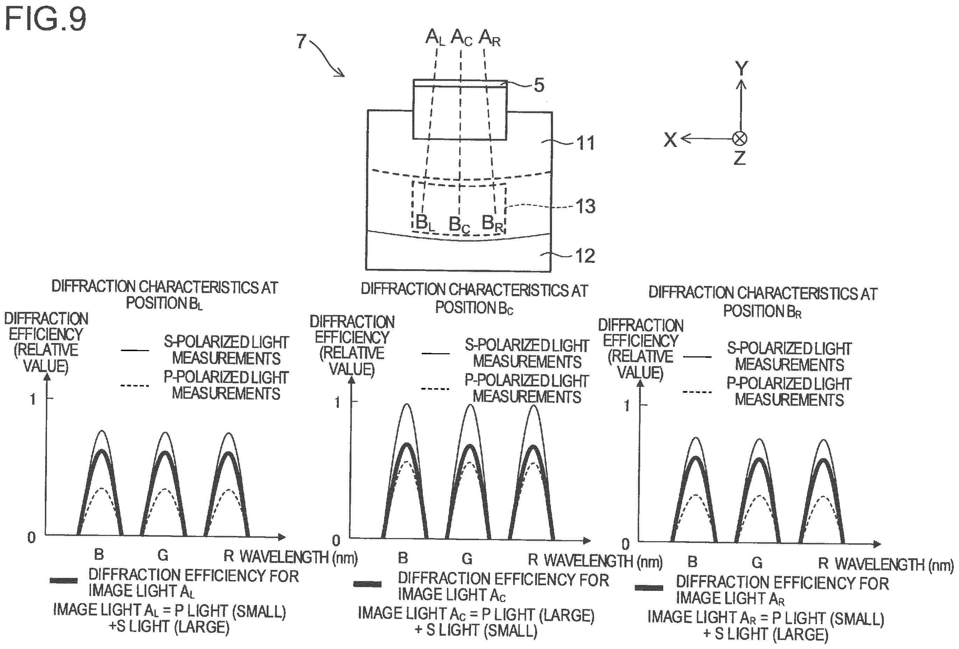

Consequently, the variation of diffraction efficiency with consideration given to polarization (the diffraction efficiency for S- and P-polarized light considered together) cancels the distribution of diffraction efficiency across the element surface of the hologram 13 (the variation of diffraction efficiency with the position on the element surface). This makes the diffraction efficiencies for the image light A_{C}, A_{L}, and A_{R} diffracted at the positions B_{C}, B_{L}, and B_{R} approximately equal among the positions B_{C}, B_{L}, and B_{R} as indicated by thick lines in Fig. 9.

That is, in the hologram 13, diffraction efficiency is higher for S-polarized light than for P-polarized light; thus, it can be said that S-polarized light contributes more than P-polarized light to the overall diffraction efficiency for P- and S-polarized light considered together. At the positions B_{L} and B_{R}, the diffraction efficiency for S-polarized light, which contributes more to the overall diffraction efficiency, is set lower than at the position B_{C}; thus, even when the image light A_{L} and A_{R}, which contain much S-polarized light, are incident at the positions B_{L} and B_{R}, the overall diffraction efficiency for P- and S-polarized light at the time that the image light A_{L} and A_{R} are diffracted at the positions B_{L} and B_{R} can be made closer to the overall diffraction efficiency for P- and S-polarized light at the time that the image light A_{C} is diffracted at the position B_{C}.

Thus, the intensity difference across the pupil plane of the image light directed from the hologram 13 to the observation pupil P is reduced; it is thus possible to reduce the brightness unevenness in the image observed at the position of the observation pupil P, and thereby to improve image quality.

In particular, as shown in Fig. 6, the hologram 13 has such diffraction characteristics that, in all of the three wavelength ranges of R, G, and B, the diffraction efficiency peak varies with the position B_{C}, B_{L}, and B_{R} across the element surface, and, in each of the wavelength ranges of R, G, and B, the diffraction efficiency peak is increasingly low the farther away across the element surface from the position B_{C} on the optical path of the image light A_{C} at which the eyepiece prism 11 exhibits the smallest amount of birefringence. Thus, it is possible, for all of the colors of R, G, and B, to reduce the intensity difference of the image light across the pupil plane of the observation pupil P. It is thus possible to reduce color unevenness from place to place, and thereby to further improve image quality.

In Fig. 6, the distributions of the diffraction efficiencies for S- and P-polarized light at different positions B_{C}, B_{L}, and B_{R} across the element surface of the hologram 13 are shown together. This, however, is not meant to limit to S- and P-polarized light the types of polarization of the light for which diffraction efficiencies are set. Instead, for example, the diffraction characteristics may be such that, when diffraction efficiency is measured for randomly polarized light (non-polarized light) at different positions B_{C}, B_{L}, and B_{R} on the hologram 13, the diffraction efficiency peak is increasingly low the farther away from the position B_{C} across the element surface. Such a distribution of diffraction efficiency for randomly polarized light is considered to give a distribution as shown in Fig. 6 for S- and P-polarized light as well. The diffraction efficiency peak measured for randomly polarized light is expected to be located, at each of the positions B_{C}, B_{L}, and B_{R}, between the diffraction efficiency peaks for S- and P-polarized light. Setting the diffraction efficiency peak for one of Sand P-polarized light so as to be increasingly low the farther away from the position B_{C} across the element surface is considered to result in the diffraction efficiency peak for the other also being set so as to be increasingly low the farther away from the position B_{C} across the element surface.

Based on what has been discussed, it can be said that, in this embodiment, when diffraction efficiencies are set for light of the same polarization types at different positions B_{C}, B_{L}, and B_{R} across the element surface of the hologram 13, the diffraction efficiency peaks have to be increasingly low the farther away from the position B_{C} across the element surface. Here, it can be said that "light of the same polarization type" may be S-polarized light, P-polarized light, or randomly polarized light.

### [Embodiment 2]

Another embodiment of the present invention will be described below with reference to the accompanying drawings. This embodiment deals with the diffraction characteristics of the hologram 13 observed when, with the eyepiece prism 11 exhibiting no birefringence, the image light from the display element 6 is, as S-polarized light, incident on the hologram 13.

A construction where, with the eyepiece prism 11 exhibiting no birefringence, image light is, as S-polarized light, incident on the hologram 13 can be obtained by modifying the construction of Embodiment 1 such that, with the transmission axis of the PBS 5 rotated by 90°, of the illumination light incident on the PBS 5, P-polarized light is reflected by the PBS 5 to be directed to the display element 6, and the image light converted by the display element 6 into light (S-polarized light) whose polarization direction is perpendicular to the incident light is shone on the PBS 5 so that this light is transmitted through the PBS 5 to enter the eyepiece prism 11.

In this embodiment, it is assumed that the birefringence of the eyepiece prism 11 is similar to that in Embodiment 1. Specifically, it is assumed that, in the eyepiece prism 11, the amount of birefringence is smallest at the center in the left-right direction, and is increasingly high the farther away in the left-right direction from the position on the optical axis incidence plane.

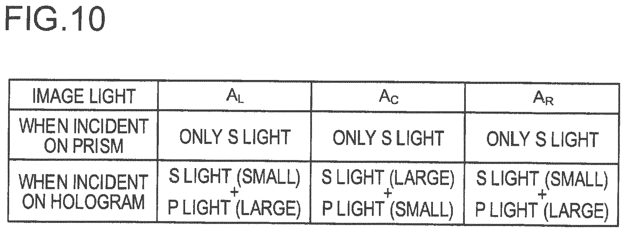

Fig. 10 shows, respectively for the image light A_{C}, A_{L}, and A_{R} in this embodiment, their polarization states when incident on the eyepiece prism 11 and when incident on the hologram 13. Since the amount of birefringence is small at about the center of the eyepiece prism 11 in the left-right direction, the image light A_{C}, which is guided inside the eyepiece prism 11 by being totally reflected in the front-rear direction along about the center of the left-right direction, is, with its S-polarized state almost wholly retained, incident on the hologram 13. Here, a condition where "the amount of birefringence is small" is assumed to include one where the amount of birefringence equals zero or substantially zero. Thus, when the amount of birefringence equals zero, the image light A_{C} is, wholly as S-polarized light, incident on the hologram 13; when birefringence is present, part of S-polarized light is converted into P-polarized light, and thus the image light A_{C} is, in a state containing both S- and P-polarized light, incident on the hologram 13.

On the other hand, the amount of birefringence is increasingly high the farther away from the center of the eyepiece prism 11 in the left-right direction. Thus, for the image light A_{L} and A_{R}, which are guided inside the eyepiece prism 11 by being totally reflected in the front-rear direction at positions away from the center of the left-right direction, a larger proportion of S-polarized light is converted into P-polarized light; thus, the image light A_{L} and A_{R} are, in a state containing more P-polarized light than the image light A_{C}, incident on the hologram 13.

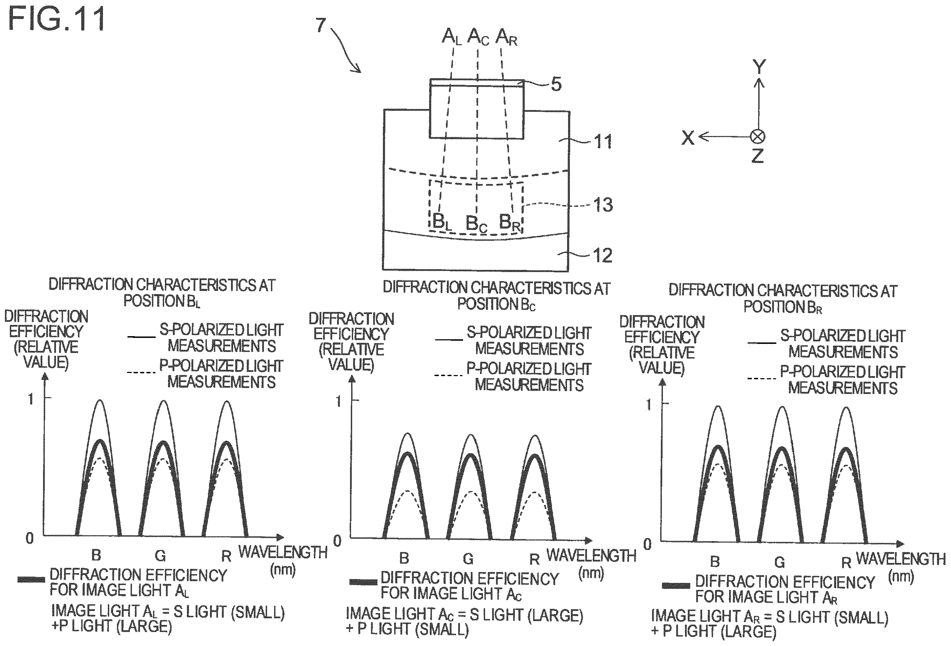

Fig. 11 shows the diffraction characteristics at different positions B_{C}, B_{L}, and B_{R} across the element surface of the hologram 13. As shown there, the hologram 13 has such diffraction characteristics that, in all of the three wavelength ranges of R, G, and B, the diffraction efficiency peak varies with the position across the element surface (the position of incidence of the image light). In this embodiment, in the hologram 13, in all of the wavelength ranges of R, G, and B, the diffraction efficiency peak is increasingly high the farther away in the left-right direction across the element surface from the position B_{C} on the optical path of the image light (the optical path of the image light A_{C}) at which the eyepiece prism 11 exhibits the smallest amount of birefringence.

That is, when diffraction efficiency for S-polarized light, for instance, is measured at different positions B_{C}, B_{L}, and B_{R} across the element surface of the hologram 13, the diffraction efficiency peak for S-polarized light at the position B_{C} is lower than the diffraction efficiency peaks for S-polarized light at the other positions B_{L} and B_{R}, and the diffraction efficiency peak for S-polarized light is increasingly high the farther away from the position B_{C} (the closer to the positions B_{L} and B_{R}) in the left-right direction. Likewise, when diffraction efficiency for P-polarized light, for instance, is measured at different positions B_{C}, B_{L}, and B_{R} on the element surface of the hologram 13, the diffraction efficiency peak for P-polarized light at the position B_{C} is lower than the diffraction efficiency peaks for P-polarized light at the other positions B_{L} and B_{R}, and the diffraction efficiency peak for P-polarized light is increasingly high the farther away from the position B_{C} (the closer to the positions B_{L} and B_{R}) in the left-right direction. Incidentally, in the hologram 13, in general, the diffraction efficiency peak for S-polarized light is higher than that for P-polarized light as in Embodiment 1.

The hologram 13 with diffraction characteristics as described above can be fabricated in the following manner. For example, in a case where a photopolymer is used as the hologram photosensitive material, by using laser beams with a bimodal intensity distribution, with low intensity at the center, such as TEM₁₀ or TEM₀₁, the hologram 13 is exposed such that a part of it where a low diffraction efficiency is desired is irradiated with central parts of the laser beams. TEM, just-mentioned, is short for transverse electromagnetic mode, and denotes a transverse mode in which electromagnetic waves propagate. Exposure may be performed with laser beams reshaped into beams with a desired intensity distribution by use of an optical element such as a mirror, a lens, or an aperture stop.

With the diffraction characteristics of the hologram 13 set as shown in Fig. 11, the image light A_{C} travels, as S-polarized light, into the eyepiece prism 11, and is guided, substantially as it is, that is, as S-polarized light, inside the eyepiece prism 11 to be incident on the hologram 13 at the position B_{C}. In the hologram 13, the diffraction efficiency for S-polarized light is higher than that for P-polarized light; thus, for the image light A_{C}, which contains a large S-polarized light component and a small P-polarized light component, the diffraction efficiency on the hologram 13 is, with consideration given to polarization, high. However, with attention paid to the distribution of diffraction efficiency across the element surface, the diffraction efficiency at the position B_{C} is lower than those at the other positions B_{L} and B_{R}.

On the other hand, the image light A_{L} and A_{R} travel, as S-polarized light, into the eyepiece prism 11, but are incident, as light containing a larger P-polarized light component than the image light A_{C} due to varying polarization states resulting from birefringence, on the hologram 13 at the positions B_{L} and B_{R} respectively. Thus, for the image light A_{L} and A_{R}, the diffraction efficiencies on the hologram 13 are, with consideration given to polarization, low (because of the small S-polarized light component). However, with attention paid to the distribution of diffraction efficiency across the element surface, the diffraction efficiencies at the positions B_{L} and B_{R} are higher than that at the other position B_{C}.

Consequently, the variation of diffraction efficiency with consideration given to polarization cancels the distribution of diffraction efficiency across the element surface of the hologram 13. This makes the diffraction efficiencies for the image light A_{C}, A_{L}, and A_{R} diffracted at the positions B_{C}, B_{L}, and B_{R} approximately equal among the positions B_{C}, B_{L}, and B_{R} as indicated by thick lines in Fig. 11.

That is, at the position B_{C} on the hologram 13, the diffraction efficiency for S-polarized light, which contributes more to the overall diffraction efficiency for P- and S-polarized light considered together, is set lower than at the positions B_{L} and B_{R}; thus, even when the image light A_{C}, which contains much S-polarized light, is incident at the position B_{C}, the overall diffraction efficiency for P- and S-polarized light at the time that the image light A_{C} is diffracted at the position B_{C} can be made closer to the overall diffraction efficiency for P- and S-polarized light at the time that the image light A_{L} and A_{R} are diffracted at the positions B_{L} and B_{R}.

Thus, the intensity difference across the pupil plane of the image light directed from the hologram 13 to the observation pupil P is reduced; it is thus possible to reduce the brightness unevenness in the image observed at the position of the observation pupil P, and thereby to improve image quality.

In particular, as shown in Fig. 11, the hologram 13 has such diffraction characteristics that, in all of the wavelength ranges of R, G, and B, the diffraction efficiency peak varies with the position B_{C}, B_{L}, and B_{R} across the element surface, and, in each of the wavelength ranges of R, G, and B, the diffraction efficiency peak is increasingly high the farther away across the element surface from the position B_{C} on the optical path of the image light A_{C} at which the eyepiece prism 11 exhibits the smallest amount of birefringence. Thus, it is possible, for all of the colors R, G, and B, to reduce the intensity difference of the image light across the pupil plane of the observation pupil P. It is thus possible to reduce color unevenness from place to place, and thereby to further improve image quality.

The embodiments described above deal with cases where the amount of birefringence in the eyepiece prism 11 has a distribution symmetric in the left-right direction. Owing to the amount of birefringence having a distribution symmetric in the left-right direction, the diffraction characteristics of the hologram 13 can be set so as to reduce brightness unevenness; even if the brightness unevenness is not eliminated completely and some of it remains, the remaining brightness unevenness has a distribution symmetric in the left-right direction, and thus the observer is unlikely to perceive the remaining brightness unevenness.

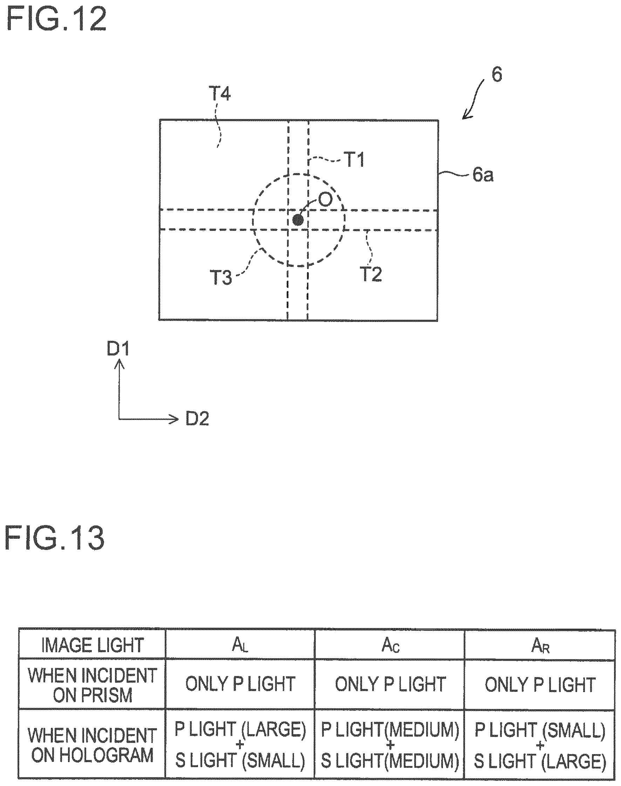

Here, in a case where the amount of birefringence has a distribution symmetric in the left-right direction, in the optical path of the image light guided near the optical axis incidence plane, the eyepiece prism 11 exhibits the smallest amount of birefringence. As mentioned above, this optical path includes the optical path of the image light A_{C}. That is, as shown in Fig. 12, the optical path of the image light guided near the optical axis incidence plane is the optical path of the light emanating from a display region T1 that includes the center O of the rectangular display surface 6a of the display element 6 and that extends along one (e.g., along the direction D1) of two mutually perpendicular directions (D1 and D2 directions) on the display surface 6a. It is here assumed that the D1 direction corresponds to the up-down direction (Y direction) of the observed image, and that the D2 direction corresponds to the left-right direction (X direction) of the observed image. Accordingly, the following can be said: so long as the optical path along which the eyepiece prism 11 exhibits the smallest amount of birefringence coincides with the optical path of the light emanating from the just-mentioned display region T1, even if the brightness unevenness remains in the observed image, it is possible to give the brightness unevenness a distribution symmetric in the left-right direction and make it unlikely to be perceived by the observer.

Instead, the optical path along which the eyepiece prism 11 exhibits the smallest amount of birefringence may be the optical path of the light emanating from a display region T2 that includes the center O of the rectangular display surface 6a of the display element 6 and that extends along the other (e.g., along the direction D2) of the two mutually perpendicular directions on the display surface 6a. In that case, the diffraction characteristics can be set such that the diffraction efficiency peak is increasingly low (or increasingly high) the farther away across the element surface from the position on the optical path of the image light at which the hologram 13 exhibits the smallest amount of birefringence, so as to reduce brightness unevenness; even if the brightness unevenness is not eliminated completely and some of it remains, the remaining brightness unevenness has a distribution symmetric in the up-down direction, and thus the observer is unlikely to perceive the remaining brightness unevenness.

Instead, as shown in Fig. 12, when the display surface 6a of the display element 6 is divided into a central region T3 including the center O and a peripheral region T4 which encloses the central region T3 within the display surface 6a, the optical path along which the eyepiece prism 11 exhibits the smallest amount of birefringence may be the optical path of the light emanating from the central region T3 of the display surface 6a. Also in this case, the diffraction characteristics can be set such that the diffraction efficiency peak is increasingly low (or increasingly high) the farther away across the element surface from the position on the optical path of the image light at which the hologram 13 exhibits the smallest amount of birefringence, so as to reduce brightness unevenness; even if the brightness unevenness is not eliminated completely and some of it remains, the brightness unevenness has a distribution rotation-symmetric (axisymmetric) about the center of the observed image (the brightness unevenness occurs in the radial direction), and thus, also here, the observer is unlikely to perceive the remaining brightness unevenness.

That is, so long as, of optical paths of the image light incident on the hologram 13, the one along which the eyepiece prism 11 exhibits the smallest amount of birefringence is one of the optical path of the light emanating from the display region T1, the optical path of the light emanating from the display region T2, and the optical path of the light emanating from the central region T3, even if brightness unevenness remains in the observed image, the brightness unevenness has a symmetric distribution, and this makes the remaining brightness unevenness unlikely to be perceived by the observer.

By appropriately setting the size, position (in the left-right and front-rear directions), and angle (the direction in which resin is injected) of the gate for resin molding, it is possible to make the optical path along which the eyepiece prism 11 exhibits the smallest amount of birefringence identical with one of the optical paths mentioned above.

The amount of birefringence produced by the eyepiece prism 11 may have a distribution non-symmetric in the left-right direction. For example, the amount of birefringence may be smallest at the left end of the eyepiece prism 11 and is increasingly high the farther away from there rightward. In the construction of Embodiment 1, where, if no birefringence is present, the image light is incident on the hologram 13 as P-polarized light, when the image light enters the eyepiece prism 11, then on the element surface of the hologram 13 are incident, as shown in Fig. 13, the image light A_{L} in a state containing much P-polarized light, the image light A_{C} in a state containing more S-polarized light than the image light A_{L}, and the image light A_{R} in a state containing more S-polarized light than the image light A_{C}.

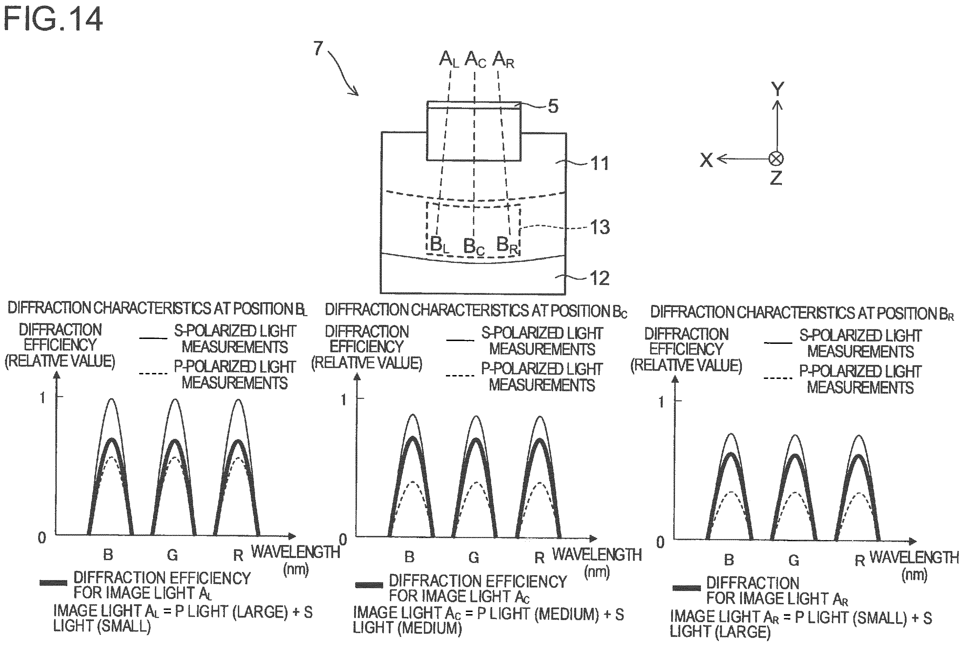

Accordingly, in this case, configuring the hologram 13 to have diffraction characteristics as shown in Fig. 14 makes it possible to reduce the brightness unevenness resulting from birefringence in the eyepiece prism 11. Specifically, when diffraction efficiencies are set for light of the same polarization type (e.g., S-polarized light) at different positions B_{C}, B_{L}, and B_{R} across the element surface of the hologram 13, the diffraction efficiency peaks have to be increasingly low the farther away across the element surface from the position B_{L} on the optical path of the image light A_{L} at which the amount of birefringence is smallest.

Incidentally, in the construction according to Embodiment 2, where, if no birefringence is present, the image light is incident on the hologram 13 as S-polarized light, the diffraction characteristics have to be set to have a distribution opposite to that mentioned above. Specifically, unevenness resulting from birefringence in the eyepiece prism 11. Specifically, when diffraction efficiencies are set for light of the same polarization type (e.g., S-polarized light) at different positions B_{C}, B_{L}, and B_{R} across the element surface of the hologram 13, the diffraction efficiency peaks have to be increasingly high the farther away across the element surface from the position B_{L} on the optical path of the image light A_{L} at which the amount of birefringence is smallest.

### [Embodiment 3]

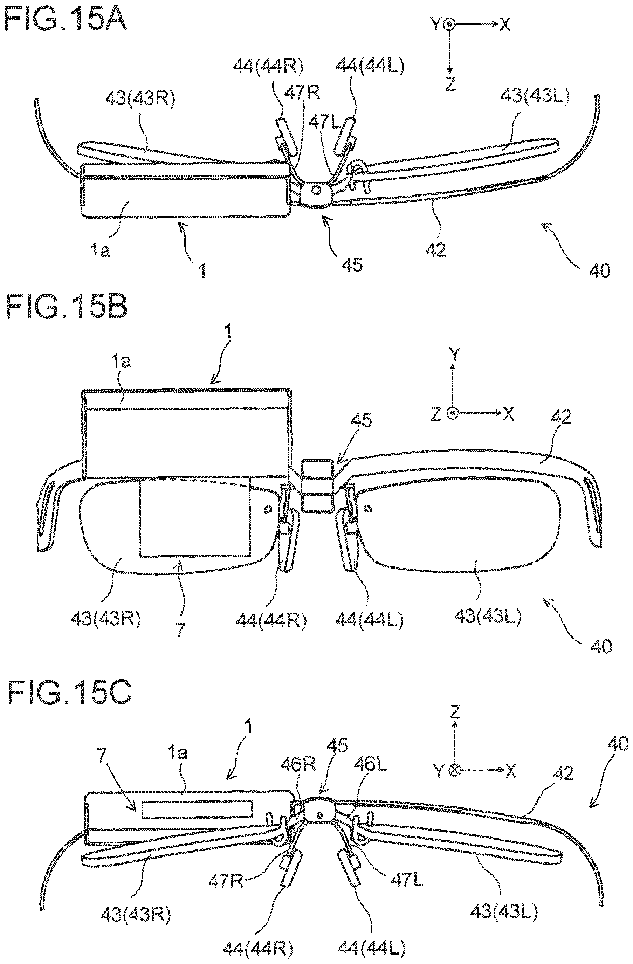

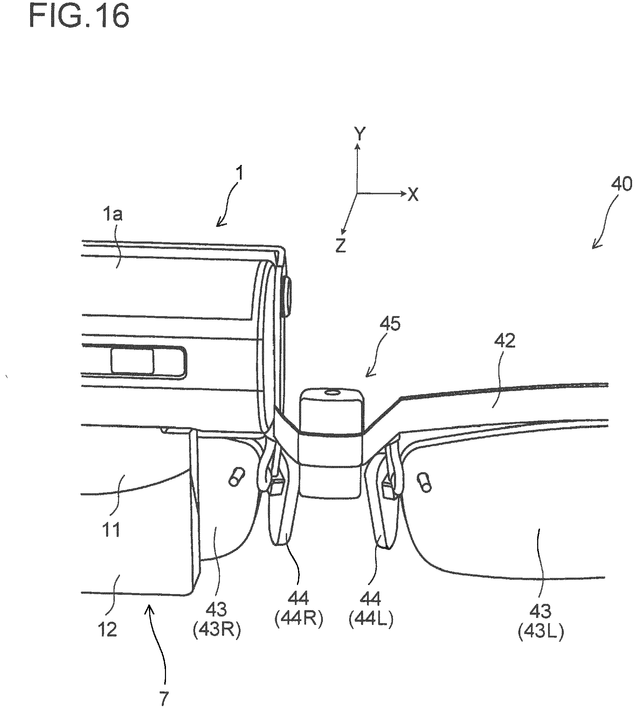

Yet another embodiment of the present invention will be described below. This embodiment deals with an HMD as an example of application of the image display devices according to Embodiments 1 and 2. Fig. 15A, 15B, and 15C are a top view, a front view, and a bottom view, respectively, of the HMD 40 according to this embodiment. Fig. 16 is a perspective view of the HMD 40 as seen from the front side.

The HMD 40 includes an image display device 1 as described previously, a frame 42, lenses 43, nose pads 44, and a position adjustment mechanism 45.

The image display device 1 has, housed inside a housing 1a, the illumination optical system 10 (the light source 2 and the illumination mirror 3), the diffuser plate 4, the PBS 5, and the display element 6, of which all have been described previously. Also, an upper end part of the eyepiece optical system 7 is located inside the housing 1a. The eyepiece optical system 7 is located in front of (on the outer world side, opposite from the observer, of) the right-eye lens 45R. The light source 2 and the display element 6 in the housed inside the housing 1a are connected to an unillustrated circuit board by a cable (unillustrated) laid to penetrate the housing 1a, and are fed with driving electric power, an image signal, and the like from the circuit board.

The image display device 1 may further include an image-taking device for taking still and moving images, a microphone, a speaker, an earphone, and the like, and may be configured to exchange (transmit and receive) information on taken images and display images and information on sounds with an external server or terminal via a communication network such as the Internet.

The frame 42 corresponds to the frame of eyeglasses. The frame 42 is a support member which is worn on the observer's head to support the image display device 1. The frame 42 includes temples which abut on left and right side parts of the observer's head.

The lenses 43 include a right-eye lens 43R and a left-eye lens 43L arranged in front of the observer's right and left eyes. The right-eye and left-eye lenses 43R and 43L are coupled to the position adjustment mechanism 45 via a right coupler 46R and a left coupler 46L. The right-eye and left-eye lenses 43R and 43L may be vision correction lenses, or may simply be dummy lenses with no vision correcting function.

The nose pads 44 include a right nose pad 44R and a left nose pad 44L which abut on the observer's nose. The right and left nose pads 44R and 44L are coupled to the position adjustment mechanism 45 via a right coupler 47R and a left coupler 47L.

The position adjustment mechanism 45 is a mechanism which permits the nose pads 44 to move relative to the frame 42 in the vertical direction, that is, in the direction perpendicular to the observer's interpupillary distance direction, and which thereby allows adjustment of the position of the image display device 1 supported on the frame 42 in the up-down direction. The position adjustment mechanism 45 may be omitted, in which case the lenses 43 and the nose pads 44 can be fastened directly to the frame 42.

When the HMD 40 is worn on the observer's head and an image is displayed on the display element 6, the image light is directed through the eyepiece optical system 7 to the observation pupil P (see Fig. 2). Thus, with the observer's pupil adjusted to the position of the observation pupil P, the observer can observe an enlarged virtual image of the display image on the image display device 1. Simultaneously, the observer can observe an outside world image through the eyepiece optical system 7 on a see-through basis.

Owing to the image display device 1 being supported on the frame 42 serving as a support member as described above, the observer can observe the image presented by the image display device 1 for a long time stably in a hands-free fashion.

Although, in Fig. 15A and the like, the eyepiece optical system 7 of the image display device 1 and the lenses 43 are configured as separate members, the eyepiece optical system 7 and the lens 43 may instead be configured as an integrated member. Two image display devices 1 may be used to allow observation of an image with both eyes.

### (Invention Defined in Other Terms)

Image display devices and head-mounted displays according to the embodiments described above can be defined also as follows.

According to one embodiment, an image display device includes: a display element which displays an image; a light guide element which guides, inside it, the image light from the display element; and a diffractive optical element which diffracts the image light guided by the light guide element to direct it to an observation pupil. The light guide element has birefringence whereby at least part of the image light incident on the diffractive optical element is doubly refracted. The image light enters the light guide element with such a polarization direction that, if the light guide element has no birefringence, the image light is P-polarized light with respect to the diffractive optical element. The diffractive optical element has such diffraction characteristics that, when diffraction efficiencies for light of the same polarization type are measured at different positions across the element surface of the diffractive optical element, diffraction efficiency peaks vary from place to place across the element surface. In the diffractive optical element, the diffraction efficiency peaks are increasingly low the farther away across the element surface from the position on the optical path of the image light at which the light guide element exhibits the smallest amount of birefringence.

Preferably, the diffractive optical element has such diffraction characteristics that the diffraction efficiency peaks vary from place to place across the element surface in all of three wavelength ranges of red, green, and blue, and the diffraction efficiency peaks are, in those wavelength ranges respectively, increasingly low the farther away across the element surface from the position on the optical path of the image light at which the light guide element exhibits the smallest amount of birefringence.

According to another embodiment, an image display device includes: a display element which displays an image; a light guide element which guides, inside it, the image light from the display element; and a diffractive optical element which diffracts the image light guided by the light guide element to direct it to an observation pupil. The light guide element has birefringence whereby at least part of the image light incident on the diffractive optical element is doubly refracted. The image light enters the light guide element with such a polarization direction that, if the light guide element has no birefringence, the image light is S-polarized light with respect to the diffractive optical element. The diffractive optical element has such diffraction characteristics that, when diffraction efficiencies for light of the same polarization type are measured at different positions across the element surface of the diffractive optical element, the diffraction efficiency peaks vary from place to place across the element surface. In the diffractive optical element, the diffraction efficiency peaks are increasingly high the farther away across the element surface from the position on the optical path of the image light at which the light guide element exhibits a smallest amount of birefringence.

Preferably, the diffractive optical element has such diffraction characteristics that the diffraction efficiency peaks vary from place to place across the element surface in all of three wavelength ranges of red, green, and blue, and the diffraction efficiency peaks are, in those wavelength ranges respectively, increasingly high the farther away across the element surface from the position on the optical path of the image light at which the light guide element exhibits the smallest amount of birefringence.

Preferably, the optical path of the image light incident on the diffractive optical element at which the light guide element exhibits the smallest amount of birefringence is one of: the optical path of light emanating from a display region that includes the center of a display surface of the display element and that extends along one of two directions perpendicular to each other on the display surface; the optical path of light emanating from a display region that includes the center of the display surface and that extends along the other of the two directions perpendicular to each other on the display surface; and the optical path of light emanating from, when the display surface is divided into a central region including its center and a peripheral region surrounding the central region within the display surface, the central region.

Preferably, the diffractive optical element is a volume-phase hologram.

Preferably, the hologram includes a plurality of resin layers that have different refractive indices and that are located alternately side by side.

Preferably, the display element is a reflective display element, and the image display device further includes: an illumination optical system which illuminates the display element; and a polarizing beam splitting element which reflects, of the illumination light from the illumination optical system, light of a predetermined polarization direction to direct the reflected light to the display element and which transmits the light reflected from the display element and having a polarization direction perpendicular to that of the light incident on the display element to direct the transmitted light to the light guide element.

According to yet another embodiment, a head-mounted display includes: an image display device as described above; and a support member which supports the image display device in front of an observer's eye.

### Industrial Applicability

Image display devices according to the present invention find application in, for example, HMDs.

### List of Reference Signs

- 1: image display device
- 5: PBS (polarizing beam splitting element)
- 6: display element
- 10: illumination optical system
- 11: eyepiece prism (light guide element)
- 13: hologram (diffractive optical element)
- 40: HMD (head-mounted display)
- 42: frame (support member)
- P: observation pupil
- T1: display region
- T2: display region
- T3: central region
- T4: peripheral region

## Claims

1. An image display device comprising:
a display element which displays an image;
a light guide element which guides, inside the light guide element, image light from the display element; and
a diffractive optical element which diffracts the image light guided by the light guide element to direct the image light to an observation pupil,
wherein
the light guide element has birefringence whereby at least part of the image light incident on the diffractive optical element is doubly refracted,
the image light enters the light guide element with such a polarization direction that, if the light guide element has no birefringence, the image light is P-polarized light with respect to the diffractive optical element,
the diffractive optical element has such diffraction characteristics that, when diffraction efficiencies for light of a same polarization type are measured at different positions across an element surface of the diffractive optical element, diffraction efficiency peaks vary from place to place across the element surface, and
in the diffractive optical element, the diffraction efficiency peaks are increasingly low the farther away across the element surface from a position on an optical path of the image light at which the light guide element exhibits a smallest amount of birefringence.

2. The image display device according to claim 1, wherein
the diffractive optical element has such diffraction characteristics that the diffraction efficiency peaks vary from place to place across the element surface in all of three wavelength ranges of red, green, and blue, and
the diffraction efficiency peaks are, in those wavelength ranges respectively, increasingly low the farther away across the element surface from the position on the optical path of the image light at which the light guide element exhibits the smallest amount of birefringence.

3. An image display device comprising:
a display element which displays an image;
a light guide element which guides, inside the light guide element, image light from the display element; and
a diffractive optical element which diffracts the image light guided by the light guide element to direct the image light to an observation pupil,
wherein
the light guide element has birefringence whereby at least part of the image light incident on the diffractive optical element is doubly refracted,
the image light enters the light guide element with such a polarization direction that, if the light guide element has no birefringence, the image light is S-polarized light with respect to the diffractive optical element,
the diffractive optical element has such diffraction characteristics that, when diffraction efficiencies for light of a same polarization type are measured at different positions across an element surface of the diffractive optical element, diffraction efficiency peaks vary from place to place across the element surface, and
in the diffractive optical element, the diffraction efficiency peaks are increasingly high the farther away across the element surface from a position on an optical path of the image light at which the light guide element exhibits a smallest amount of birefringence.

4. The image display device according to claim 3, wherein
the diffractive optical element has such diffraction characteristics that the diffraction efficiency peaks vary from place to place across the element surface in all of three wavelength ranges of red, green, and blue, and
the diffraction efficiency peaks are, in those wavelength ranges respectively, increasingly high the farther away across the element surface from the position on the optical path of the image light at which the light guide element exhibits the smallest amount of birefringence.

5. The image display device according to any one of claims 1 to 4, wherein
the optical path of the image light incident on the diffractive optical element at which the light guide element exhibits the smallest amount of birefringence is one of
an optical path of light emanating from a display region that includes a center of a display surface of the display element and that extends along one of two directions perpendicular to each other on the display surface,
an optical path of light emanating from a display region that includes the center of the display surface and that extends along another of the two directions perpendicular to each other on the display surface, and
an optical path of light emanating from, when the display surface is divided into a central region including the center thereof and a peripheral region surrounding the central region within the display surface, the central region.

6. The image display device according to any one of claims 1 to 5, wherein
the diffractive optical element is a volume-phase hologram.

7. The image display device according to claim 6, wherein
the hologram includes a plurality of resin layers that have different refractive indices and that are located alternately side by side.

8. The image display device according to any one of claims 1 to 7, wherein
the display element is a reflective display element, and
the image display device further comprises:
an illumination optical system which illuminates the display element; and
a polarizing beam splitting element which reflects, of illumination light from the illumination optical system, light of a predetermined polarization direction to direct reflected light to the display element and which transmits light reflected from the display element and having a polarization direction perpendicular to a polarization direction of light incident on the display element to direct transmitted light to the light guide element.

9. A head-mounted display comprising:
the image display device according to any one of claims 1 to 8; and
a support member which supports the image display device in front of an eye of an observer.
